# FASCICULE DE BREVET EUROPEEN

(11) **EP 1 304 490 B1**
(45) Date de publication et mention de la délivrance du brevet: **07.06.2006**
(21) Numéro de dépôt: 02292492.2
(22) Date de dépôt: 09.10.2002
(51) Int. Cl.: F16B 15/08, F16B 19/14, B25C 1/08, B25C 1/04

(54) **Bande d'éléments de fixation et chargeur pour une telle bande pour appareil d'entraînement de tels éléments de fixation**
Streifen von Befestigungsmitteln und Magazin mit solchen Streifen für ein Antriebswerkzeug solcher Befestigungsmittel
Strip of fixing means and magazine containing such a strip for a driving tool of such fixing means

(30) Priorité: 18.10.2001 FR 0113452
(43) Date de publication de la demande: 23.04.2003
(73) Titulaire: Société de Prospection et d'Inventions Techniques S P I T, 26501 Bourg les Valence (FR)
(72) Inventeur: Almeras, Roland, 07300 Tournon (FR); Herelier, Patrick, 07300 Tournon (FR)
(74) Mandataire: Bloch, Gérard

(56) Documents cités:
- EP-B- 0 502 667
- US-A- 3 955 674
- US-A- 4 971 503

## Description

Le domaine de l'invention est celui de la fixation d'éléments du type clou ou tampon, comportant une tige avec une tête arrière et une extrémité avant pointue.

Généralement, on utilise à cet effet un appareil de scellement à tir indirect et on introduit dans le canon un élément de fixation, soit à la main, par l'avant, dans le guide-tampon de l'appareil, soit automatiquement à l'aide d'un chargeur.

Pour que lors de son entraînement dans le canon de l'appareil, après la mise à feu et avant d'être introduit dans le matériau récepteur, l'élément de fixation reste parfaitement coaxial au canon, ne bascule pas sur l'axe et donc reste bien guidé, on a déjà proposé de glisser sur la tige de l'élément de fixation une rondelle ou un pion de guidage. En fait, on a déjà proposé deux rondelles de guidage espacées sur la tige ou un pion de guidage d'une longueur axiale suffisante pour assurer une bonne cohésion entre le clou et son pion de guidage.

On remarquera que l'alimentation dans le canon de l'appareil d'éléments de fixation à rondelles de guidage ne peut s'effectuer qu'à la main, à la rigueur à partir d'un distributeur, alors que les éléments de fixation à pion de guidage peuvent être présentés dans une bande, leurs pions accolés les uns aux autres en un chapelet, la bande étant montée dans un chargeur, avec un ressort de rappel pour, quand le chargeur est monté sur l'appareil, pousser la bande et introduire un pion de guidage dans le canon avant chaque tir. Un chapelet de pions de guidage est décrit, par exemple, dans le brevet EP 0 502 667.

On remarquera encore qu'avec les éléments de fixation en bande, après chaque tir, le pion de l'élément à entraîner est séparé du pion adjacent par cisaillement par la masselotte de l'appareil puis, au moment de l'enfoncement de l'élément de fixation dans le matériau récepteur, le pion sert d'amortisseur et de rondelle.

La demanderesse a constaté qu'un pion n'était pas toujours suffisant pour assurer un bon guidage de l'élément de fixation quand il est long et c'est pourquoi elle propose ici son invention.

L'invention concerne tout d'abord une bande d'éléments de fixation, chacun avec une tige pointue à une extrémité et portant une tête à l'autre extrémité, respectivement engagés par leurs tiges dans des pions de guidage et d'amortissement réunis les uns aux autres en un chapelet, caractérisée par le fait qu'elle comporte un deuxième chapelet de guidage.

Le deuxième chapelet de guidage peut être constitué de rondelles de guidage réunies les unes aux autres, comme les pions de guidage et d'amortissement du premier chapelet, mais le deuxième chapelet peut aussi être constitué de pions de guidage et d'amortissement.

Les deux chapelets ne sont pas nécessairement réalisés dans la même matière.

Dans le cas d'une bande d'éléments de fixation courts, les deux chapelets peuvent être accolés l'un à l'autre sur les tiges des éléments de fixation.

Dans le cas d'éléments de fixation longs, les deux chapelets sont avantageusement espacés l'un de l'autre le long des tiges des éléments de fixation.

L'invention concerne également un chargeur pour bande d'éléments de fixation pour appareil d'entraînement de tels éléments avec, chacun, une tige et une tête, respectivement engagés par leurs tiges dans des premiers pions de guidage et d'amortissement réunis en un premier chapelet et dans des deuxièmes moyens de guidage réunis en un deuxième chapelet, chargeur comprenant une chambre de réception des têtes d'élément, une chambre de réception du premier chapelet et une chambre de réception du deuxième chapelet, les chambres étant deux à deux réunies par des cheminées de réception des tiges d'élément.

Avantageusement, la chambre la plus éloignée de la chambre de réception des têtes de tige débouche dans une troisième cheminée de réception de portions de tige d'élément, pour des éléments à tige longue.

De préférence, la chambre de réception des têtes d'élément est agencée pour recevoir aussi l'un des deux chapelets, dans le cas d'éléments à tige longue guidés en deux endroits espacés l'un de l'autre.

De préférence aussi, il est prévu une chambre intermédiaire agencée pour recevoir les deux chapelets, dans le cas d'éléments à tige courte engagés dans deux chapelets accolés l'un à l'autre.

L'invention sera mieux comprise à l'aide de la description suivante de plusieurs formes de réalisation de la bande d'éléments de fixation et du chargeur de bande, en référence au dessin annexé, sur lequel
- la figure 1 est une vue en plan de la bande, les éléments longs étant engagés dans les pions de guidage et d'amortissement de deux chapelets espacés l'un de l'autre ;
- la figure 2 est une vue de profil de la bande de la figure 1 ;
- la figure 3 est une vue en plan de la bande, similaire à celle de la figure 1, mais les deux chapelets étant accolés l'un à l'autre ;
- la figure 4 est une vue de profil de la bande de la figure 3 ;
- la figure 5 est une vue en plan de la bande, similaire à celle de la figure 1, les pions des deux chapelets étant de réalisation simplifiée, avec des pions de guidage sans portion d'éclatement ;
- la figure 6 est une vue de profil de la bande de la figure 5 ;
- la figure 7 est une vue en coupe du chargeur de l'invention, avec une bande d'éléments de fixation courts ;
- la figure 8 est une vue en coupe selon la ligne VIII-VIII de la figure 7 ;
- la figure 9 est une vue en coupe selon la ligne IX-IX de la figure 7 ;
- la figure 10 est une vue en coupe du chargeur de l'invention, avec une bande d'éléments de fixation longs ;
- la figure 11 est une vue en coupe selon la ligne XI-XI de la figure 10 et
- la figure 12 est une vue en coupe selon la ligne XII-XII de la figure 10.

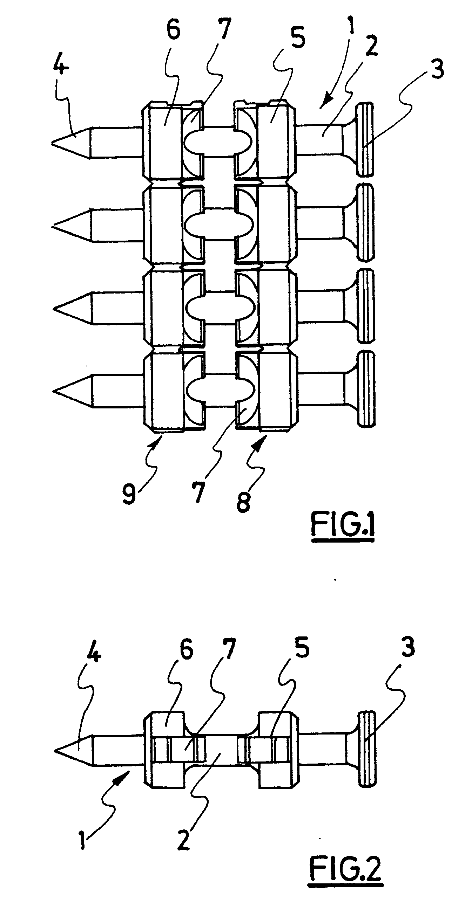

La bande d'éléments de fixation des figures 1 et 2 comporte donc des éléments de fixation 1, avec une tige 2, une tête 3 et une extrémité pointue 4, chacun des éléments de fixation 1 étant engagé dans deux pions de guidage et d'amortissement 5, 6 à portion d'éclatement 7, comme décrit par exemple dans EP 0 502 667. Les pions 5, 6 sont espacés l'un de l'autre le long de la tige 2. Les pions 5, les plus proches des têtes 3, sont réunis les uns aux autres en un premier chapelet 8, les pions 6, les plus proches des extrémités pointues 4, en un deuxième chapelet 9 espacé du premier.

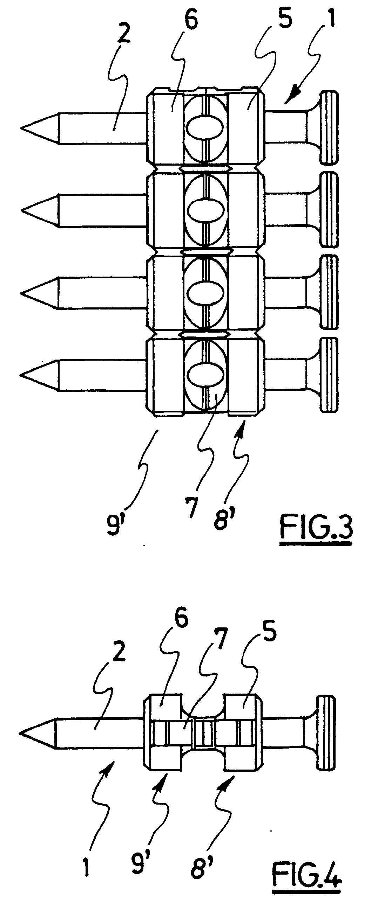

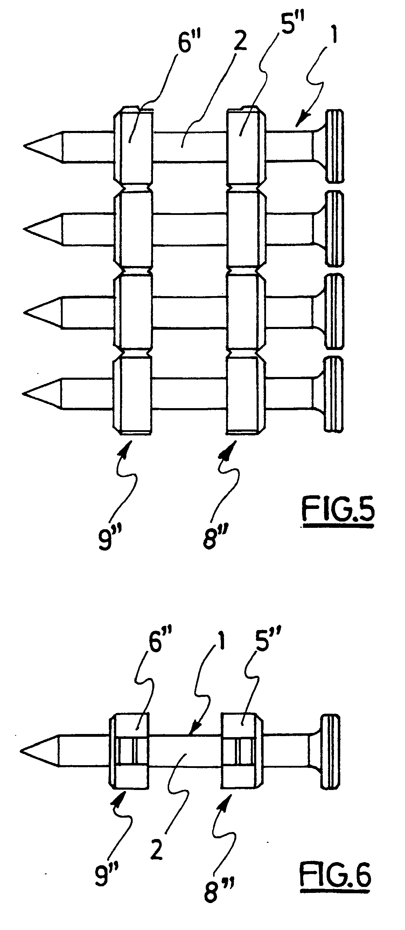

La bande d'éléments de fixation des figures 3 et 4 est quasiment identique à la précédente. La seule différence réside dans le fait que les deux chapelets 8', 9' sont accolés l'un à l'autre. Ces chapelets sont glissés sur les mêmes éléments de fixation 1, de même longueur, que ceux de l'exemple précédent ; toutefois, cette disposition de deux chapelets accolés convient mieux à des éléments de fixation courts.

La bande d'éléments de fixation des figures 5 et 6 est aussi quasiment identique aux précédentes. La seule différence avec celle des premières figures 1 et 2 réside dans le fait que les deux chapelets 8", 9", glissés sur les mêmes éléments de fixation 1, sont de réalisation simplifiée, avec des pions de guidage 5", 6" sans portion d'éclatement.

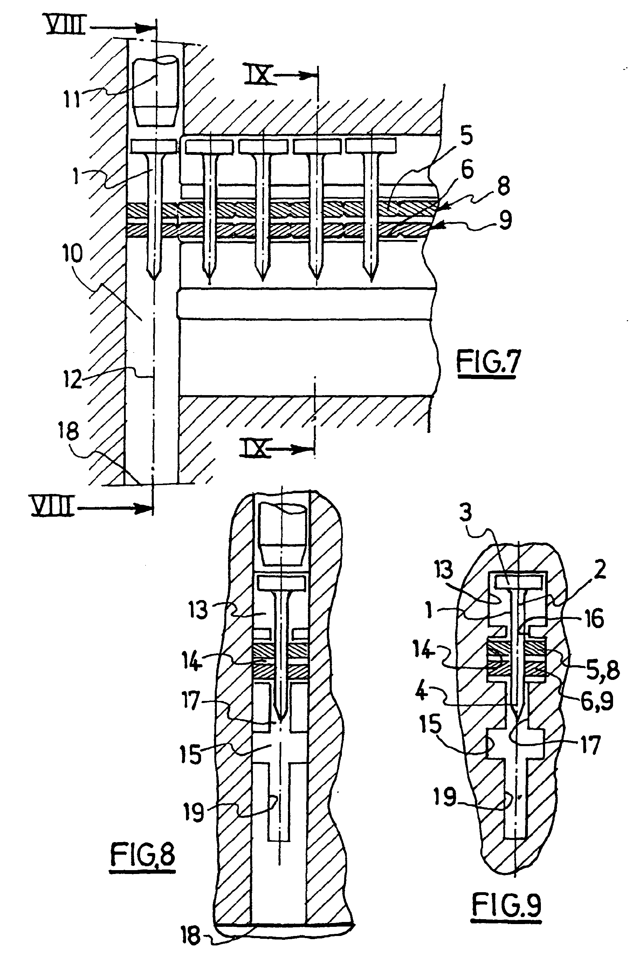

En référence aux figures 7-12, on va maintenant décrire un chargeur pour bande d'éléments de fixation pouvant être monté de façon classique sur un appareil d'entraînement et de fixation de ces éléments, comprenant un canon 10 dans lequel est montée coulissante une masselotte 11 d'entraînement d'un élément de fixation 1. Le chargeur, pour ce qui concerne l'avance automatique de la bande d'éléments et donc le chargement du canon, est agencé de façon classique, avec un ressort de rappel, non représenté, pour pousser la bande dans la direction de l'axe 12 du canon et introduire un élément avec ses deux pions de guidage dans le canon.

Le chargeur comporte trois chambres 13, 14 et 15 parallélépipédiques s'étendant longitudinalement, c'est-à-dire dans la direction d'avance de la bande dans le chargeur ; ces trois chambres sont réunies deux à deux par deux cheminées 16, 17 de réception de portions de tige des éléments de fixation, la chambre de réception 15, la plus proche de l'embouchure 18 du canon 10, débouchant dans une troisième cheminée 19. La largeur des chambres n'est que très légèrement supérieure au diamètre (ou à la largeur) des pions de guidage 5, 6, alors que la largeur des cheminées n'est que très légèrement supérieure au diamètre des tiges 2 des éléments de fixation 1.

Les têtes 3 des éléments de fixation 1 sont reçues dans la première chambre 13, la plus éloignée de l'embouchure 18 du canon 10. En cas d'éléments de fixation à tige courte, comme ceux des figures 7-9, les pions de guidage 5, 6 des deux chapelets accolés l'un à l'autre sont reçus dans la chambre intermédiaire 14, les pointes 4 des tiges 2 des éléments de fixation s'étendant dans la cheminée 17 reliant la chambre intermédiaire 14 et la troisième chambre 15, la plus proche de l'embouchure de canon 18.

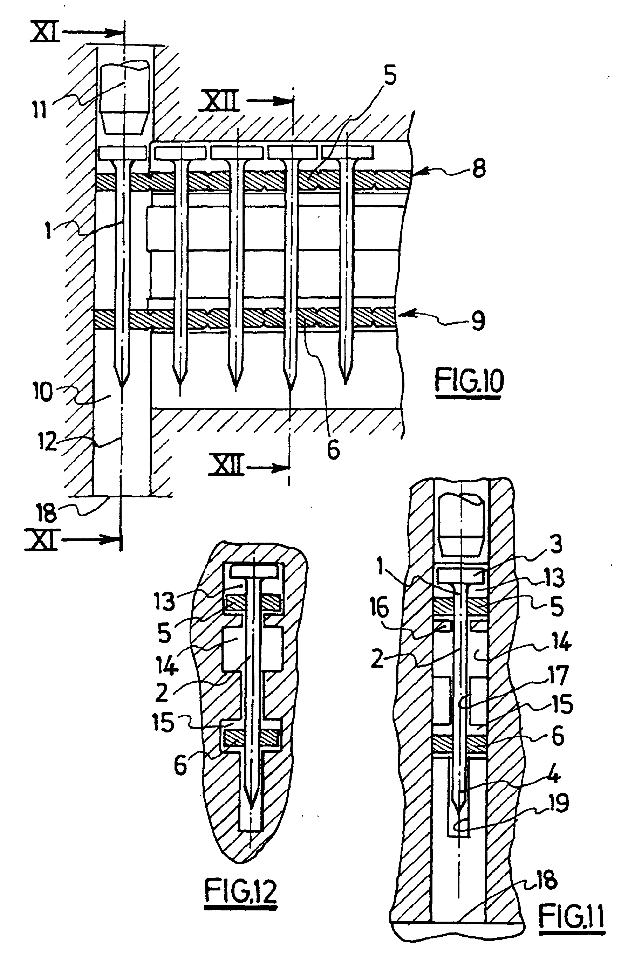

Dans le cas d'éléments de fixation 1 à tige longue, comme ceux des figures 10-12, les deux chapelets 8, 9 de pions de guidage 5, 6 étant espacés l'un de l'autre sur les tiges 2 des éléments 1, le premier chapelet 8 des pions 5, les plus proches des têtes 3, est reçu dans la même chambre 13 que les têtes 3. Le deuxième chapelet 9 des pions 6 est reçu dans la troisième chambre 15, la deuxième chambre intermédiaire 14 étant vide de pions et seulement traversée par des portions des tiges d'éléments 2, dont les extrémités 4 s'étendent dans la troisième cheminée 19. On aura remarqué que c'est par souci de simplicité que les références des éléments de fixation des figures 7-9 ont été reprises sur les figures 10-12.

## Revendications

1. Bande d'éléments de fixation (1), chacun avec une tige (2) pointue à une extrémité (4) et portant une tête (3) à l'autre extrémité, respectivement engagés par leurs tiges (2) dans des pions de guidage et d'amortissement réunis les uns aux autres en un chapelet (8), **caractérisée par le fait qu'**elle comporte un deuxième chapelet de guidage (9).

2. Bande d'éléments de fixation selon la revendication 1, dans laquelle le deuxième chapelet de guidage est constitué de rondelles de guidage réunies les unes aux autres.

3. Bande d'éléments de fixation selon la revendication 1, dans laquelle le deuxième chapelet (9) est constitué de pions de guidage et d'amortissement (6).

4. Bande d'éléments de fixation selon la revendication 3, dans laquelle les éléments de fixation (1) sont courts et les deux chapelets (8', 9') sont accolés l'un à l'autre sur les tiges (2) des éléments de fixation (1).

5. Bande d'éléments de fixation selon la revendication 3, dans laquelle les éléments de fixation (1) sont longs et les deux chapelets (8, 9 ; 8", 9") sont espacés l'un de l'autre le long des tiges (2) des éléments de fixation (1).

6. Chargeur pour bande d'éléments de fixation pour appareil d'entraînement de tels éléments avec, chacun, une tige (2) et une tête (3), respectivement engagés par leurs tiges (2) dans des premiers pions de guidage et d'amortissement (5) réunis en un premier chapelet (8) et dans des deuxièmes moyens de guidage (6) réunis en un deuxième chapelet (9), chargeur comprenant une chambre (13) de réception des têtes d'élément (3), une chambre (14 ; 13) de réception du premier chapelet (8) et une chambre (14 ; 15) de réception du deuxième chapelet (9), les chambres étant deux à deux réunies par des cheminées (16, 17) de réception des tiges d'élément (2).

7. Chargeur selon la revendication 6, dans lequel la chambre (15) la plus éloignée de la chambre (13) de réception des têtes de tige (3) débouche dans une troisième cheminée (19) de réception de portions de tige d'élément (4), pour des éléments (1) à tige longue (2).

8. Chargeur selon l'une des revendications 6 et 7, dans lequel la chambre (13) de réception des têtes d'élément (3) est agencée pour recevoir aussi l'un (8) des deux chapelets, dans le cas d'éléments à tige longue (2) guidés en deux endroits espacés l'un de l'autre (8).

9. Chargeur selon l'une des revendications 6 à 8, dans lequel il est prévu une chambre intermédiaire (14) agencée pour recevoir les deux chapelets (8, 9), dans le cas d'éléments (1) à tige courte (2) engagés dans deux chapelets (8, 9) accolés l'un à l'autre.

## Claims

1. Strip of fasteners (1), each having a shank (2) which is pointed at one end (4) and bears a head (3) at the other end, the fasteners being respectively engaged by their shanks (2) in guide and damping blocks which are joined together to form a string (8), **characterized in that** the strip has a second guide string (9).

2. Strip of fasteners according to Claim 1, in which the second guide string consists of guide washers which are joined together.

3. Strip of fasteners according to Claim 1, in which the second string (9) consists of guide and damping blocks (6).

4. Strip of fasteners according to Claim 3, in which the fasteners (1) are short and the two strings (8', 9') are arranged back to back on the shanks (2) of the fasteners (1).

5. Strip of fasteners according to Claim 3, in which the fasteners (1) are long and the two strings (8, 9; 8'', 9'') are spaced apart along the shanks (2) of the fasteners (1).

6. Loader for strip of fasteners for apparatus for driving such elements each having a shank (2) and a head (3), the fasteners being respectively engaged by their shanks (2) in first guide and damping blocks (5) which are joined together to form a first string (8) and in second guide means (6) which are joined together to form a second string (9), the loader comprising a chamber (13) for accommodating the fastener heads (3), a chamber (14; 13) for accommodating the first string (8) and a chamber (14; 15) for accommodating the second string (9), the chambers being joined in pairs by means of ducts (16, 17) for accommodating the fastener shanks (2).

7. Loader according to Claim 6, in which the chamber (15) furthest away from the chamber (13) for accommodating the shank heads (3) opens into a third duct (19) for accommodating fastener shank portions (4) for fasteners (1) having a long shank (2).

8. Loader according to either of Claims 6 and 7, in which the chamber (13) for accommodating the fastener heads (3) is designed to additionally accommodate one (8) of the two strings in the case of fasteners having a long shank (2) which are guided at two spaced-apart locations.

9. Loader according to one of Claims 6 to 8, in which there is provided an intermediate chamber (14) designed to accommodate the two strings (8, 9) in the case of fasteners (1) having a short shank (2) which are engaged in two strings (8, 9) arranged back to back.

## Patentansprüche

1. Streifen von Befestigungselementen (1), die je einen an einem Ende (4) spitzen und am anderen Ende einen Kopf (3) tragenden Schaft (2) aufweisen und über ihre Schäfte (2) in Führungs- und Dämpfungshülsen eingeführt sind, die in einer Kette (8) miteinander verbunden sind, **dadurch gekennzeichnet, dass** er eine zweite Führungskette (9) aufweist.

2. Befestigungselementstreifen nach Anspruch 1, bei dem die zweite Führungskette aus miteinander verbundenen Führungslochscheiben besteht.

3. Befestigungselementstreifen nach Anspruch 1, bei dem die zweite Kette (9) aus Führungs- und Dämpfungshülsen (6) besteht.

4. Befestigungselementstreifen nach Anspruch 3, bei dem die Befestigungselemente (1) kurz und die beiden Ketten (8', 9') auf den Schäften (2) der Befestigungselemente (1) aneinander gefügt sind.

5. Befestigungselementstreifen nach Anspruch 3, bei dem die Befestigungselemente (1) lang und die beiden Ketten (8, 9; 8", 9") entlang der Schäfte (2) der Befestigungselemente (1) in Abstand zueinander angeordnet sind.

6. Magazin für einen Befestigungselementstreifen für ein Antriebsgerät solcher Elemente, die je einen Schaft (2) und einen Kopf (3) aufweisen und über ihren Schaft (2) in erste Führungs- und Dämpfungshülsen (5), die in einer ersten Kette (8) miteinander verbunden sind, und in zweite Führungsmittel (6) eingeführt sind, die in einer zweiten Kette (9) miteinander verbunden sind, wobei das Magazin eine Aufnahmekammer (13) für die Elementköpfe (3), eine Aufnahmekammer (14; 13) für die erste Kette (8), und eine Aufnahmekammer (14; 15) für die zweite Kette (9) aufweist, wobei die Kammern paarweise durch Aufnahmeschächte (16, 17) für die Elementschäfte (2) miteinander verbunden sind.

7. Magazin nach Anspruch 6, bei dem die Kammer (15), die am weitesten von der Aufnahmekammer (13) für die Schaftköpfe (3) entfernt ist, in einen dritten Aufnahmeschacht (19) für Elementschaftabschnitte (4) von Elementen (1) mit langem Schaft (2) mündet.

8. Magazin nach einem der Ansprüche 6 und 7, bei dem die Aufnahmekammer (13) der Elementköpfe (3) ausgelegt ist, um bei Elementen mit langem Schaft (2), die an zwei voneinander entfernten Stellen geführt werden, auch eine der beiden Ketten (8) aufzunehmen.

9. Magazin nach einem der Ansprüche 6 bis 8, bei dem eine Zwischenkammer (14) vorgesehen ist, die ausgelegt ist, um bei Elementen (1) mit kurzem Schaft (2), die in zwei aneinander gefügte Ketten (8, 9) eingeführt sind, die beiden Ketten (8, 9) aufzunehmen.
